# EUROPÄISCHE PATENTSCHRIFT

(11) **EP 1 762 757 B1**
(45) Veröffentlichungstag und Bekanntmachung des Hinweises auf die Patenterteilung: **12.03.2008**
(21) Anmeldenummer: 05019423.2
(22) Anmeldetag: 07.09.2005
(51) Int. Cl.: F16J 15/16, F16J 15/56

(54) **Dichtungsanordnung**
Sealing arrangement
Dispositif de joint d'étanchéité

(43) Veröffentlichungstag der Anmeldung: 14.03.2007
(73) Patentinhaber: Carl Freudenberg KG, 69469 Weinheim (DE)
(72) Erfinder: Werther, Hans, 21220 Seevetal-Ramelsloh (DE); Steep, Frank, 20257 Hamburg (DE)

(56) Entgegenhaltungen:
- DE-B- 1 018 276
- DE-C1- 10 117 662
- US-A- 3 970 321
- US-A- 4 262 759
- US-A1- 2004 206 590

## Beschreibung

### Technisches Gebiet

Die Erfindung betrifft eine Dichtungsanordnung, umfassend einen axial in Richtung eines abzudichtenden Raums angeordneten Primärdichtring und einen Sekundärdichtring, der dem Primärdichtring auf der dem abzudichtenden Raum axial abgewandten Seite mit axialem Abstand benachbart zugeordnet ist, wobei der Sekundärdichtring dem Primärdichtring in einer funktionstechnischen Reihenschaltung nachgeschaltet ist, wobei der Primär- und der Sekundärdichtring an eine abzudichtende Fläche eines abzudichtenden Maschinenelements jeweils dichtend angelegt sind, wobei der Primär- und der Sekundärdichtring die stimseitige Begrenzung eines Ringraums bilden.

### Stand der Technik

Eine solche Dichtungsanordnung ist aus der DE 101 17 662 C1 bekannt. Innerhalb des Ringraums zwischen dem Primär- und dem Sekundärdichtring ist ein Führungsring für eine abzudichtende, translatorisch hin- und herbewegliche Stange angeordnet. Der Sekundärdichtring ist als Lippendichtung ausgebildet und weist eine Dichtlippe auf, die die abzudichtende Fläche der abzudichtenden Stange unter radialer Vorspannung dichtend umschließt.

Bei derartigen Dichtungsanordnungen, die einen Primär- und einen Sekundärdichtring umfassen, kann es bei relativer translatorischer Bewegung der beiden gegeneinander abzudichtenden Maschinenelemente, beispielsweise einem Gehäuse und einer Stange, zwischen dem Primär- und dem Sekundärdichtring zu einem unerwünschten Druckanstieg kommen, der teilweise den eigentlichen Betriebsdruck innerhalb des abzudichtenden Raums übersteigt. Im zuvor genannten Stand der Technik sind daher innerhalb des Primärdichtrings mehrere Druck-Entlastungsöffnungen-vorgesehen, die bei unerwünscht hohem Druck innerhalb des Ringraums, wenn der Druck innerhalb des Ringraums höher als im abzudichtenden Raum ist, den Ringraum mit dem abzudichtenden Raum strömungsleitend verbinden. Dadurch, dass der Primärdichtring innerhalb seiner Primär-Einbaunut in axialer Richtung, bedingt durch den Differenzdruck zwischen abzudichtendem Raum und Ringraum, axial hin- und herbeweglich ist, wird die strömungsleitende Verbindung zwischen Ringraum und abzudichtenden Raum wieder unterbrochen, sobald der Druck innerhalb des abzudichtenden Raums wieder höher ist, als im Ringraum.

Unter ungünstigen Betriebs- und Einbaubedingungen, wie z. B. einem langen Kolbenhub und/oder einer Schädigung des Primärdichtrings, kann es jedoch zu unerwünscht hohen Druckbelastungen innerhalb des Ringraums kommen, die ungehindert auf den Sekundärdichtring wirken und zu dessen Beschädigung oder Zerstörung führen können. Der Sekundärdichtring ist üblicherweise derart dimensioniert und ausgelegt, dass er nicht geeignet ist, einer plötzlichen und/oder vollen Druckbeaufschlagung aus dem abzudichtenden Raum über eine längere Gebrauchsdauer Stand zu halten.

Liegt innerhalb des Ringraums ein Druck an, der dem Druck im abzudichtenden Raum entspricht, oder ist der Druck im Ringraum sogar höher, erhöhen sich die Reibungskräfte zwischen dem Sekundärdichtring und der abzudichtenden Oberfläche des abzudichtenden Maschinenelements, wodurch die Funktion und/oder die Lebensdauer der Dichtungsanordnung insgesamt nachteilig eingeschränkt ist. Auch die Extrusionskräfte, die auf das Dichtsystem wirken, sind nachteilig hoch.

### Darstellung der Erfindung

Der Erfindung liegt die Aufgabe zugrunde, eine Dichtungsanordnung der eingangs genannten Art derart weiterzuentwickeln, dass die Dichtungsanordnung verbesserte Gebrauchseigenschaften während einer längeren Gebrauchsdauer aufweist, insbesondere, dass die hydraulischen und/oder mechanischen Belastungen auf das gesamte Dichtsystem, insbesondere den Sekundärdichtring, minimiert werden.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass innerhalb des Ringraums ein - bezogen auf den Primär- und den Sekundärdichtring - separat erzeugter erster Druckpuffer angeordnet ist und/oder dass der Sekundärdichtring als zweiter Druckpuffer ausgebildet ist.

Bei einer solchen Ausgestaltung ist von Vorteil, dass der erste und/oder der zweite Druckpuffer unerwünscht hohe Drücke innerhalb des Ringraums aufnehmen und dass die unerwünscht hohen Drücke oder Druckspitzen durch zumindest einen der Druckpuffer nur verzögert und abgeschwächt auf das Dichtsystem wirken, insbesondere an den vergleichsweise empfindlichen Sekundärdichtring gelangen. Die Druckpuffer werden in der Hochdruckphase und/oder bei Bewegungen der Stange (Schleppdruck) beim Druckaufbau innerhalb des Ringraums ebenfalls vom Druck beaufschlagt und elastisch nachgiebig verformt/elastisch nachgiebig verdichtet. Die Druckpuffer erfüllen ihre Funktion, nämlich den Schutz des gesamten Dichtsystems, insbesondere des Sekundärdichtrings, dadurch, dass sie sich zeitlich vor dem Sekundärdichtring elastisch nachgiebig verformen/verdichten. Die Dichtungsanordnung weist dadurch insgesamt gleich bleibend gute Gebrauchseigenschaften während einer langen Gebrauchsdauer auf. Außerdem ist die Dichtungsanordnung einfach und kostengünstig herstellbar, durch ihren einfachen Aufbau.

Der Ringraum kann durch zumindest eine Druck-Entlastungsöffnung mit dem abzudichtenden Raum strömungsleitend verbindbar sein. Durch die Druck-Entlastungsöffnung wird der Überdruck aus dem Ringraum in den abzudichtenden Raum abgeführt.

Der Primärdichtring ist bevorzugt innerhalb einer Primär-Einbaunut axial hin- und herbeweglich angeordnet und weist die Druck-Entlastungsöffnung auf, durch die der Ringraum und der abzudichtende Raum strömungsleitend verbindbar sind.

Der erste Druckpuffer ist bevorzugt ringförmig und elastisch nachgiebig ausgebildet und in einer radial in Richtung des abzudichtenden Maschinenelements offenen Einbaunut angeordnet. Generell kann die ringförmige Gestalt des ersten Druckpuffers beliebig sein, jedoch ist von Vorteil, wenn der erste Druckpuffer kreisringförmig ausgebildet ist. Hierbei ist von Vorteil, dass der erste Druckpuffer dadurch einfach und kostengünstig herstellbar ist, ebenso wie die entsprechend ausgebildete Einbaunut, in der der erste Druckpuffer angeordnet ist.

Der erste Druckpuffer kann als gasgefüllter Schlauch ausgebildet sein, der durch eine zumindest teilweise elastisch nachgiebige, gegen das abzudichtende Medium beständige Wandung begrenzt ist. Die Wandung, aus der der erste Druckpuffer besteht, ist außerdem diffusionsdicht. Weder abzudichtendes Medium gelangt vom abzudichtenden Raum in den Schlauch, nach entweicht Gas aus dem Schlauch nach außen, z. B. in den abzudichtenden Raum.

Bevorzugt besteht der Schlauch vollständig aus einem elastomeren Werkstoff. Dadurch können auch große Druckbelastungen durch Verformung des Schlauchs rasch aufgenommen und dadurch nur verzögert und abgeschwächt an den Sekundärdichtring gelangen,

Innerhalb des Schlauchs kann herstellungsbedingt Atmosphärendruck herrschen. Ein solcher Druckpuffer ist einfach und kostengünstig herstellbar und weist für viele Anwendungsfälle ausreichend gute Puffer-Eigenschaften auf.

Nach einer anderen Ausgestaltung kann das gasförmige Medium innerhalb des Schlauchs herstellungsbedingt mit einem, bezogen auf den Atmosphärendruck, relativen Überdruck beaufschlagt sein. Einem etwas aufwändigeren Herstellungsverfahren steht die Möglichkeit einer besseren Anpassung an die jeweiligen Gegebenheiten des Anwendungsfalles gegenüber. Insbesondere dann, wenn während des Betriebs der Dichtungsanordnung mit großen Druckbelastungen im Ringraum zu rechnen ist und dadurch bei einem Schlauch, in dem herstellungsbedingt Atmosphärendruck herrscht, die Gefahr bestehen würde, dass die Pufferwirkung nicht ausreicht, da der Schlauch vollständig zusammengedrückt wird, ist ein Schlauch, in dem herstellungsbedingt, bezogen auf den Atmosphärendruck, ein relativer Überdruck herrscht, von Vorteil.

Der erste Druckpuffer kann aus einem kompressiblen polymeren Werkstoff bestehen. Für den ersten Druckpuffer können dabei geeignete Schaumstoffe zur Anwendung gelangen, die einerseits eine geeignete Kompressibilität/Elastizität zum Puffern auftretender Drücke aufweisen und andererseits gegen das abzudichtende Medium beständig sind. Bezogen auf Schläuche aus elastomerem Werkstoff sind erste Druckpuffer aus geeignetem Schaumstoff einfacher und kostengünstiger herstellbar.

Bevorzugt kann der erste Druckpuffer aus einem geschlossenzelligen thermoplastischen Werkstoff bestehen. Dadurch ist sichergestellt, dass das abzudichtende Medium nicht in den Werkstoff hinein diffundiert.

Entscheidend ist, dass der erste Druckpuffer innerhalb des Ringraums axial zwischen dem Primärdichtring und dem Sekundärdichtring angeordnet ist, um das gesamte Dichtsystem, insbesondere den Sekundärdichtring, wirkungsvoll vor einer unerwünscht hohen Druckbeaufschlagung zu schützen. Der erste Druckpuffer umschließt die abzudichtende Fläche des abzudichtenden Maschinenelements bevorzugt mit radialem Abstand.

Zusätzlich oder alternativ kann der Sekundärdichtring, der den zweiten Druckpuffer bildet, eine dem Primärdichtring axial abgewandte erste Stirnseite aufweisen, die als in axialer Richtung elastisch nachgiebiger Verformungsbereich ausgebildet ist, der eine größere axiale Nachgiebigkeit aufweist, als der übrige Sekundärdichtring. Durch den in axialer Richtung vergleichsweise nachgiebigen Verformungsbereich, der auf der dem Primärdichtring axial abgewandten Seite des Sekundärdichtrings angeordnet ist, können unerwünscht hohe Drücke durch den Sekundärdichtring selbst, nämlich durch den Verformungsbereich, gepuffert werden. Unerwünscht hohe Druckbelastungen werden durch den Verformungsbereich gepuffert und belasten dadurch nicht die funktionswesentlichen Bestandteile des Dichtsystems, insbesondere den Sekundärdichtring, beispielsweise die Dichtlippe des Sekundärdichtrings, die an der abzudichtenden Fläche des abzudichtenden Maschinenelements dichtend anliegt.

Generell kann der Verformungsbereich durch eine entsprechende Geometrie und/oder einen gegenüber dem übrigen Sekundärdichtring veränderten Werkstoff gebildet sein.

Die erste Stirnseite kann eine Fase aufweisen, die mit dem Nutgrund der Sekundär-Einbaunut und der dem Primärdichtring axial abgewandten Stirnseite der Sekundär-Einbaunut einen - im Schnitt betrachtet-dreieckförmigen Hohlraum begrenzt, Bei druckbedingter, axialer Verlagerung des Sekundärdichtrings in Richtung des Verformungsbereichs wird der Verformungsbereich elastisch verformt, entweder in sich selbst, falls es sich um einen kompressiblen Werkstoff handelt, aus dem der Verformungsbereich besteht, oder der Werkstoff wird in Richtung des Hohlraums verdrängt, wenn der Verformungsbereich aus einem nicht-kompressiblen Werkstoff, wie beispielsweise einem weichen Gummi besteht.
Durch die vergleichsweise geringere Anlagefläche erhöht sich der spezifische Druck auf die Anlagefläche und die Nachgiebigkeit in axialer Richtung ist, zum Puffern von Druckbelastungen, größer, als wenn die erste Stirnseite vollflächig an der dem Primärdichtring axial abgewandten Stirnseite der Sekundär-Einbaunut anliegen würde.

Nach einer anderen Ausgestaltung kann die erste Stirnseite zumindest eine axial entgegen dem Primärdichtring offene ringförmige erste Ausnehmung aufweisen. Abhängig von den jeweiligen Gegebenheiten des Anwendungsfalles, insbesondere abhängig von der Höhe der zu erwartenden Druckbelastungen, kann es vorgesehen sein, dass zumindest zwei Ausnehmungen zur Anwendung gelangen, die einander konzentrisch zugeordnet sind. Konzentrisch zueinander angeordnete Ausnehmungen sind einfach und kostengünstig herstellbar und die Gebrauchseigenschaften des zweiten Druckpuffers können vergleichsweise einfach an die jeweiligen Gegebenheiten des Anwendungsfalles angepasst werden.

Um die elastische Nachgiebigkeit in axialer Richtung und damit die Pufferwirkung des zweiten Druckpuffers weiter zu verbessern, kann der zweite Druckpuffer entsprechend einer in axialer Richtung elastisch nachgiebigen Federscheibe ausgebildet sein. Der zweite Druckpuffer weist dann, in Umfangsrichtung betrachtet, eine Wellenform mit axial vorspringenden Wellen auf. Eine derartige Ausgestaltung ist sowohl für schlauchförmige zweite Druckpuffer als auch für zweite Druckpuffer aus kompressiblen Werkstoffen geeignet. Durch die schlauchförmige Gestalt des zweiten Druckpuffers oder den aus einem kompressiblen Werkstoff bestehenden zweiten Druckpuffer, jeweils in Verbindung mit der Wellenform, kann sich eine funktionstechnische Parallelschaltung oder eine funktionstechnische Reihenschaltung der Pufferwirkung/Federraten ergeben.
Insbesondere dann, wenn der zweite Druckpuffer derart gestaltet ist, dass sich eine funktionstechnische Reihenschaltung der Pufferwirkung/Federraten ergibt, ist dies hinsichtlich der Pufferwirkung von unterschiedlich hohen Druckbelastungen von hervorzuhebendem Vorteil.
Bei vergleichsweise kleinen Druckbelastungen würde sich zum Puffern des Drucks beispielsweise zunächst der schlauchförmige oder aus Schaumstoff bestehende zweite Druckpuffer zusammendrücken oder zunächst würde die Wellenform die Druckbelastung puffern. Bei vergleichsweise höheren Druckbelastungen würde sich zusätzlich anschließend die Wellenform elastisch verformen oder der Schaumstoff oder der Schlauch würden zusammengedrückt. Diese stufenweise Pufferung des Drucks ist von Vorteil, weil Druckbelastungen dadurch in einem großen Druckbereich wirkungsvoll gepuffert werden können.

Auf der dem Primärdichtring axial abgewandten Seite des Sekundärdichtrings kann ein Abstreifring angeordnet sein, mit zumindest einer Abstreiflippe, die die abzudichtende Fläche des abzudichtenden Maschinenelements anliegend berührt. Die Abstreiflippe des Abstreifrings sorgt dafür, dass ein in die Dichtungsanordnung einfahrendes abzudichtendes Maschinenelement von Verunreinigungen aus der Umgebung gereinigt wird; unerwünscht hoher abrassiver Verschleiß des Sekundärdichtrings und/oder des Primärdichtrings und/oder des ersten-Druckpuffers wird dadurch verhindert.

Auf der dem abzudichtenden Raum axial zugewandten Seite des Primärdichtrings kann ein Führungsring für das abzudichtende Maschinenelement angeordnet sein. Der Führungsring ist separat vom Primärdichtring und/oder Sekundärdichtring erzeugt und sorgt dafür, dass die zueinander relativ beweglichen Maschinenelemente während des Betriebs der Dichtungsanordnung einander exakt zugeordnet sind. Der Primärdichtring und der Sekundärdichtring und der erste Druckpuffer brauchen dann keine Führungsfunktion zu übernehmen.

Das abzudichtende Maschinenelement kann durch eine translatorisch hin- und herbewegbare Stange gebildet sein, die gegenüber einem die Stange außenumfangsseitig umschließenden Gehäuse abgedichtet ist. Nach einer anderen Ausgestaltung kann das abzudichtende Maschinenelement durch ein translatorisch hin- und herbewegbares Gehäuse gebildet sein, das gegenüber einer durch das Gehäuse geführten Stange abgedichtet ist und diese außenumfangsseitig umschließt.

### Kurzbeschreibung der Zeichnungen

Fünf Ausführungsbeispiele der erfindungsgemäßen Dichtungsanordnung werden nachfolgend anhand der Figuren 1 bis 6 näher beschrieben.

Diese zeigen jeweils in schematischer Darstellung:
- Fig. 1: ein erstes Ausführungsbeispiel, bei dem innerhalb eines Ringraums zwischen-Primärdichtring und Sekundärdichtring ein erster schlauchförmiger Druckpuffer angeordnet ist,
- Fig. 2: ein zweites Ausführungsbeispiel, ähnlich dem Ausführungsbeispiel aus Fig. 1, wobei der erste Druckpuffer aus einem Schaumstoff besteht,
- Fig. 3: ein Ausführungsbeispiel eines zweiten Druckpuffers
- Fig. 4: ein drittes Ausführungsbeispiel, bei dem der Sekundärdichtring als zweiter Druckpuffer ausgebildet ist,
- Fig. 5: ein viertes Ausführungsbeispiel, ähnlich dem Ausführungsbeispiel aus Fig. 4, mit abweichend gestaltetem zweiten Druckpuffer,
- Fig. 6: ein fünftes Ausführungsbeispiel, bei dem die Dichtungsanordnung sowohl einen ersten als auch einen zweiten Druckpuffer umfasst.

### Ausführung der Erfindung

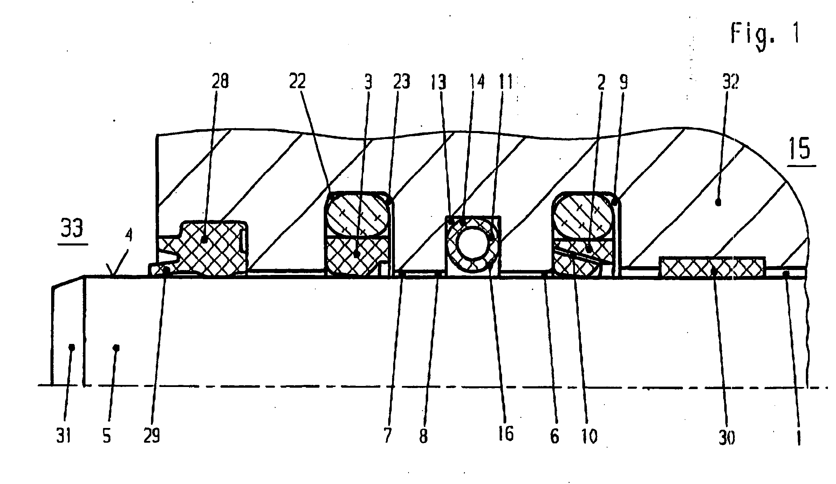

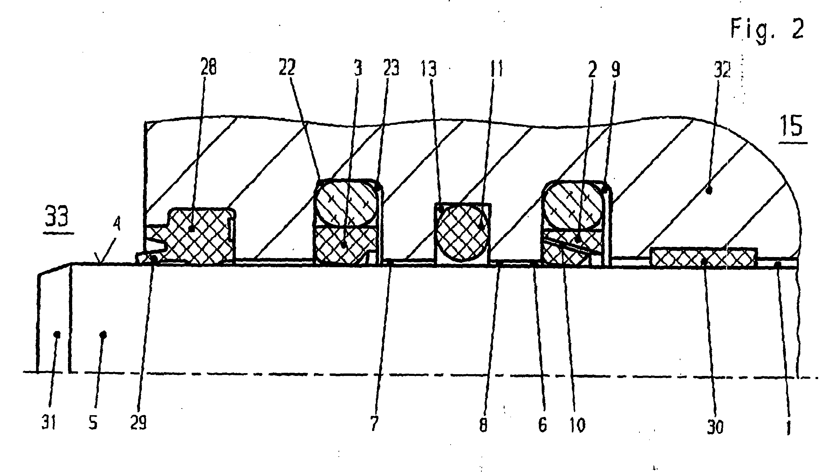

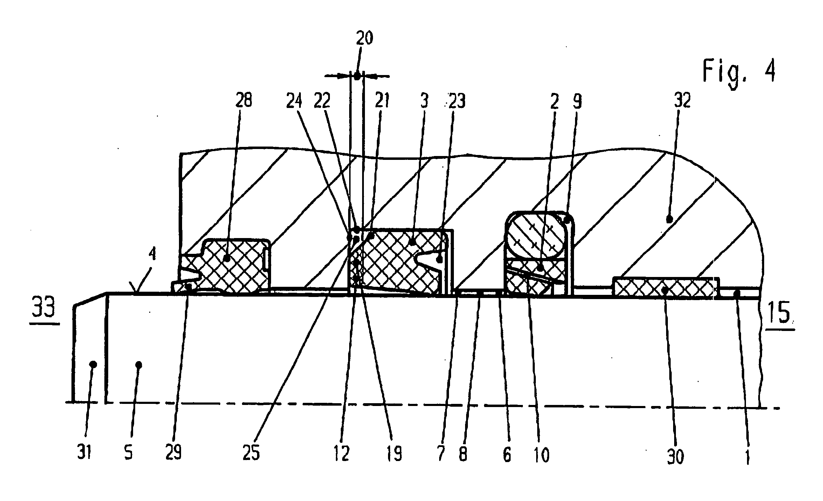

In den Figuren 1 und 2 sowie in den Figuren 4 bis 6 ist jeweils ein Ausführungsbeispiel einer erfindungsgemäßen Dichtungsanordnung gezeigt Die jeweils dargestellte Dichtungsanordnung umfasst im Wesentlichen einen Primärdichtring 2 und einen Sekundärdichtring 3, die den abzudichtenden Raum 1 gegenüber der Umgebung 33 abdichten. Der Primärdichtring 2 und der Sekundärdichtring 3 sind einander mit axialem Abstand benachbart zugeordnet, und bilden die stirnseitigen Begrenzungen 6, 7 des durch den Abstand gebildeten Ringraums 8.

In jedem der hier dargestellten Ausführungsbeispiele wird das abzudichtende Maschinenelement 5 mit seiner abzudichtenden Fläche 4 durch eine translatorisch hin und herbewegbare Stange 31 gebildet, und die Bestandteile der Dichtungsanordnung sind jeweils in radial in Richtung der Stange 31 offenen Nuten 9, 13, 23 des Gehäuses 32 angeordnet.

Entscheidend ist in jedem der gezeigten Ausführungsbeispiele, dass innerhalb des Ringraums 8 ein - bezogen auf den Primär- 2 und den Sekundärdichtring 3 - separat erzeugter erster Druckpuffer 11 angeordnet ist (Figuren 1 und 2) und/oder dass der Sekundärdichtring 3 als zweiter Druckpuffer 12 ausgebildet ist (Figuren 4, 5 und 6).

Durch die erfindungsgemäße Dichtungsanordnung werden unerwünscht hohe Drücke innerhalb des Ringraums 8 durch den ersten und/oder den zweiten Druckpuffer 11, 12 aufgenommen, und unerwünscht hohe Druckbelastungen gelangen deshalb nur verzögert und abgeschwächt an den vergleichsweise empfindlichen Sekundärdichtring 3. Die Druckpuffer 11, 12 werden in der Hochdruckphase beim Druckaufbau innerhalb des Ringraums 8 ebenfalls vom Druck beaufschlagt und elastisch nachgiebig verformt/elastisch nachgiebig verdichtet. Die Druckpuffer 11, 12 erfüllen ihre Funktion, nämlich den Schutz des gesamten Dichtsystems, insbesondere des Sekundärdichtrings 3, dadurch, dass sie sich zeitlich vor dem Sekundärdichtring 3 elastisch nachgiebig verformen/verdichten. Die Dichtungsanordnung weist dadurch insgesamt gleich bleibend gute Gebrauchseigenschaften während einer langen Gebrauchsdauer auf.

Zur Dichtungsanordnung gehört in den hier dargestellten Ausführungsbeispielen außerdem ein Abstreifring 28 mit zumindest einer Abstreiflippe 29, der auf der dem Primärdichtring 2 axial abgewandten Seite des Sekundärdichtrings 3 angeordnet ist.
Auf der dem abzudichtenden Raum 1 axial zugewandten Seite des Primärdichtrings 2 ist ein Führungsring 30 angeordnet, durch den das abzudichtende Maschinenelement 5, hier die Stange 31, im Gehäuse 32 geführt ist.

Zur Herstellung des Primärdichtrings 2, des Sekundärdichtrings 3, des Abstreifrings 28 und des Führungsrings 30 können jeweils allgemein bekannte und geeignete Werkstoffe zur Anwendung gelangen, beispielsweise kann der Primärdichtring 2, wie hier dargstellt, zweiteilig ausgebildet sein und ein O-Ringförmiges Anpresselement aus elastomerem Werkstoff umfassen, das ein Dichtelement aus polymerem Werkstoff, beispielsweise PTFE, außenumfangsseitig umschließt. Das innerhalb seines Einbauraums unter radialer elastischer Vorspannung angeordnete Anpresselement sorgt für eine gleichmäßige Anpressung des Dichtelements auf die abzudichtende Fläche 4 des abzudichtenden Maschinenelements 5.
In den Figuren 1 und 2 ist der Sekundärdichtring 3, mit Ausnahme der Druck-Entlastungsöffnungen 10, entsprechend dem Primärdichtring 2 gestaltet.

Die Druck-Entlastungsöffnung 10 des Primärdichtrings 2 umfasst in den hier gezeigten Ausführungsbeispielen mehrere, gleichmäßig in Umfangsrichtung verteilte Druck-Entlastungsöffnungen 10, die dafür sorgen, dass relativer Überdruck innerhalb des Ringraums 8, bezogen auf den abzudichtenden Raum 1, dadurch abgebaut wird, dass der Primärdichtring 2 innerhalb seiner Primär-Einbaunut 9 axial in Richtung des abzudichtenden Raums 1 verlagert wird, der relative Überdruck innerhalb des Ringraums 4 durch die Druck-Entlastungsöffnungen 10 in Richtung des abzudichtenden Raums 1 abgeführt wird, wobei der Primärdichtring 2 anschließend, sobald der Druck innerhalb des abzudichtenden Raums 1 wieder höher ist, als im Ringraum 8, wieder die hier dargestellte Position innerhalb der Primär-Einbaunut 9 einnimmt.

Um gleich bleibend gute Gebrauchseigenschaften während einer langen Gebrauchsdauer sicherzustellen, insbesondere um eine Beschädigung oder Zerstörung des Sekundärdichtrings 3 zu verhindern, sind der erste 11 und/oder zweite Druckpuffer 12 von entscheidender Wichtigkeit.

Der erste Druckpuffer 11 ist innerhalb des Ringraums angeordnet und/oder der Sekundärdichtring 3 ist als zweiter Druckpuffer 12 ausgebildet. Die Druckpuffer 11, 12 fungieren als Druckspeicher, die in der Hochdruckphase beim Druckaufbau innerhalb des Ringraums 8 ebenfalls unter Druck gesetzt und verdichtet werden. Durch die elastische Nachgiebigkeit der Druckpuffer 11, 12 steigt der Druck innerhalb des Ringraums 8 zwischen Primär- 2 und Sekundärdichtring deutlich langsamer an und erreicht nur einen geringeren Maximaldruck. Fällt der Druck innerhalb des abzudichtenden Raums 1, verringert sich mittels der Druck-Entlastungsöffnung 10 auch der Druck innerhalb des Ringraums 8. Das verdichtete Volumen der Druckpuffer 11, 12 expandiert wieder. In der nächsten Hochdruckphase innerhalb des abzudichtenden Raums 1 können die Druckpuffer 11 und/oder 12 wieder komprimiert werden.

In Fig. 1 ist der erste Druckpuffer 11 als gasgefüllter Schlauch 14 ausgebildet, mit einer Wandung 16, die vollständig aus elastomerem Werkstoff besteht. Im inneren des Schlauchs 14 kann Atmosphärendruck oder ein den Atmosphärendruck übersteigender relative Überdruck bestehen, so dass die elastische Nachgiebigkeit des ersten Druckpuffers 11 an die zu erwartende Höhe des Überdrucks/an die zu erwartenden Druckspitzen angepasst werden kann. Der Schlauch 14 berührt im hier dargestellten Ausführungsbeispiel die abzudichtende Fläche 4 des abzudichtenden Maschinenelements 5 nicht; der Schlauch 14 umschließt die abzudichtende Fläche 4 des abzudichtenden Maschinenelements 5 mit radialem Abstand.

In Fig. 2 ist ein zweites Ausführungsbeispiel gezeigt, ähnlich dem Ausführungsbeispiel aus Fig. 1. Der erste Druckpuffer 11 ist abweichend gestaltet und besteht aus einem kompressiblen, geschlossenzelligen thermoplastischen Werkstoff.

Die ersten Druckpuffer 11 aus den Figuren 1 und 2 sind jeweils gegen das abzudichtende Medium 15 beständig und insgesamt diffusionsdicht.

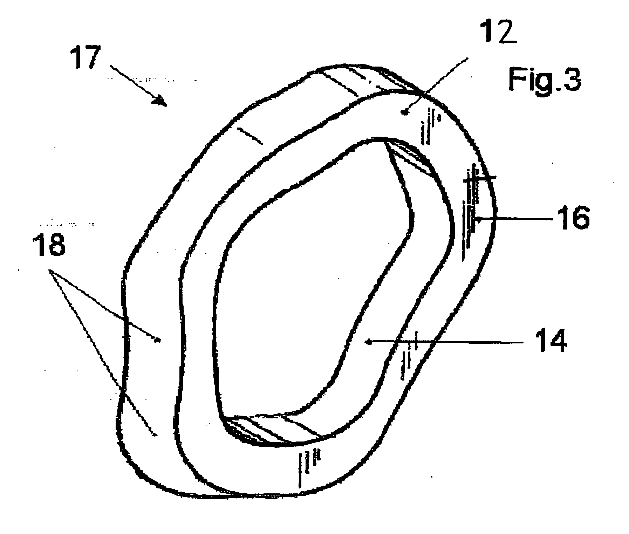

In Fig. 3 ist ein Ausführungsbeispiel eines zweiten Druckpuffers 12 perspektivisch dargestellt. Der zweiten Druckpuffer 12 ist kreisringförmig ausgebildet und entsprechend einer in axialer Richtung elastisch nachgiebigen Federscheibe ausgebildet. Der zweite Druckpuffer 12 weist daher, in Umfangsrichtung betrachtet, eine Wellenform 17 mit axial vorspringenden Wellen 18 auf. Durch einen solchen zweiten Druckpuffer 12 erfolgt die Beaufschlagung des Sekundärdichtrings 3 mit relativem Überdruck aus dem abzudichtenden Raum 1 und/oder Druckspitzen besonders weich, da der zweite Druckpuffer 15 kompressibel ist und sich außerdem bei Druckbeaufschlagung durch seine Wellenform geometrisch verformt.
Die kompressible und geometrische Verformung kann zeitlich aufeinanderfolgend geschehen (funktionstechnische Reihenschaltung).
Der zweite Druckpuffer 12 in Fig. 3 kann als Schlauch ausgebildet sein und aus elastomerem Werkstoff bestehen oder aus einem kompressiblem Schaumstoff.

In Fig. 4 ist der Sekundärdichtring 3 als zweiter Druckpuffer 12 ausgebildet. Der zweite Druckpuffer 12 besteht auf der dem abzudichtenden Raum 1 zugewandten Seite aus einem elastomeren Werkstoff, und seine dem Primärdichtring 2 axial abgewandte erste Stirnseite 19 besteht aus einem vergleichsweise elastisch nachgiebigeren Werkstoff, so dass der zweite Druckpuffer 12 einen Verformungsbereich 20 aufweist, der in axialer Richtung elastisch nachgiebiger ist, als der übrige Sekundärdichtring 3.
Weiter verbessert wird die elastische Nachgiebigkeit in axialer Richtung dadurch, dass die erste Stirnseite 19 eine Fase 21 aufweist, die mit dem Nutgrund 22 der Sekundär-Einbaunut 23 und der dem Primärdichtring 2 axial abgewandten Stirnseite 24 der Sekundär-Einbaunut 23 einen - im Schnitt betrachtet - dreieckförmigen Hohlraum 25 begrenzt.

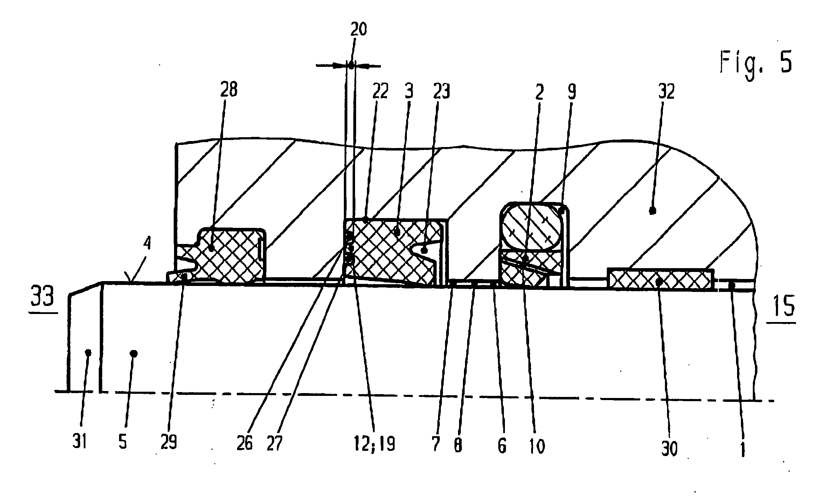

Das Ausführungsbeispiel aus Fig. 5 unterscheidet sich vom Ausführungsbeispiel aus Fig. 4 durch die Gestalt des zweiten Druckpuffers 12. Die erste Stirnseite 19 weist in diesem Beispiel zwei axial entgegen dem Primärdichtring 2 offene ringförmige Ausnehmungen 26, 27 auf, die einander konzentrisch zugeordnet sind. In Abhängigkeit von den jeweiligen Gegebenheiten des Anwendungsfalls können auch mehrere Ausnehmungen 26, 27, ... zur Anwendung gelangen. Ansonsten ist der Sekundärdichtring 3, der den zweiten Druckpuffer 12 bildet, materialeinheitlich ausgebildet und besteht aus elastomerem Werkstoff.

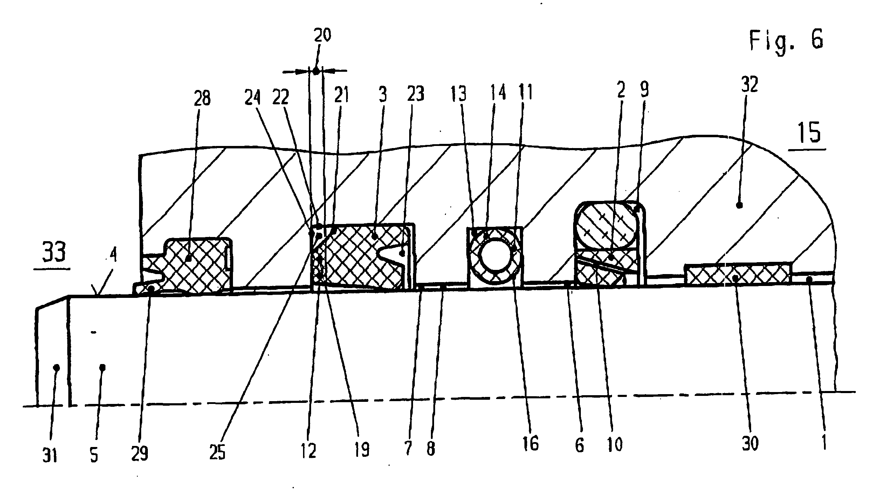

In Fig. 6 ist ein fünftes Ausführungsbeispiel einer Dichtungsanordnung gezeigt, bei der die Merkmale der Dichtungsanordnung aus den Figuren 6 und 4 kombiniert sind. Die Druckpuffer 11, 12 weisen in diesem Beispiel unterschiedliche Steifigkeiten auf, um ein abgestuftes Puffern von Druckbelastungen zu ermöglichen.

## Patentansprüche

1. Dichtungsanordnung, umfassend zumindest einen axial in Richtung eines abzudichtenden Raums (1) angeordneten Primärdichtring (2) und zumindest einen Sekundärdichtring (3), der dem Primärdichtring (2) auf der dem abzudichtenden Raum (1) axial abgewandten Seite mit axialem Abstand benachbart zugeordnet ist, wobei der Sekundärdichtring (3) dem Primärdichtring (2) in einer funktionstechnischen Reihenschaltung nachgeschaltet ist, wobei der Primär (2) und der Sekundärdichtring (3) an eine abzudichtende Fläche (4) eines abzudichtenden Maschinenelements (5) jeweils dichtend anlegbar sind, wobei der Primär (2) und der Sekundärdichtring (3) die stirnseitige Begrenzung (6, 7) eines Ringraums (8) bilden, **dadurch gekennzeichnet, dass** innerhalb des Ringraums (8) ein - bezogen auf den Primär- (2) und den Sekundärdichtring (3) - separat erzeugter erster Druckpuffer (11) angeordnet ist und/oder der Sekundärdichtring (3) als zweiter Druckpuffer (12) ausgebildet ist

2. Dichtungsanordnung nach Anspruch 1, **dadurch gekennzeichnet, dass** der Ringraum (8) durch zumindest eine Druck-Entlastungsöffnung (10) mit dem abzudichtenden Raum (1) strömungsleitend verbindbar ist.

3. Dichtungsanordnung nach einem der Ansprüche 1 oder 2, **dadurch gekennzeichnet, dass** der Primärdichtring (2) innerhalb einer Primär-Einbaunut (9) axial hin- und herbeweglich ist und die Druck-Entlastungsöffnung (10) aufweist, durch die der Ringraum (8) und der abzudichtende Raum (1) strömungsleitend verbindbar sind.

4. Dichtungsanordnung nach einem der Ansprüche 1 bis 3, **dadurch gekennzeichnet, dass** der erste Druckpuffer (11) ringförmig und elastisch nachgiebig ausgebildet und in einer radial in Richtung des abzudichtenden Maschinenelements (5) offenen Einbaunut (13) angeordnet ist

5. Dichtungsanordnung nach einem der Ansprüche 1 bis 4, **dadurch gekennzeichnet, dass** der erste Druckpuffer (11) kreisringförmig ausgebildet ist

6. Dichtungsanordnung nach einem der Ansprüche 1 bis 5, **dadurch gekennzeichnet, dass** der erste Druckpuffer (11) als gasgefüllter Schlauch (14) ausgebildet ist, der durch eine zumindest teilweise elastisch nachgiebige, gegen das abzudichtende Medium beständige Wandung (16) begrenzt ist

7. Dichtungsanordnung nach Anspruch 6, **dadurch gekennzeichnet, dass** der Schlauch (14) vollständig aus einem elastomeren Werkstoff besteht.

8. Dichtungsanordnung nach einem der Ansprüche 6 oder 7, **dadurch gekennzeichnet, dass** innerhalb des Schlauchs (14) herstellungsbedingt Atmosphärendruck herrscht

9. Dichtungsanordnung nach einem der Ansprüche 6 oder 7, **dadurch gekennzeichnet, dass** das gasförmige Medium Innerhalb des Schlauchs (14) herstellungsbedingt mit einem, bezogen auf den Atmosphärendruck, relativen Überdruck beaufschlagt ist

10. Dichtungsanordnung nach einem der Ansprüche 1 bis 9, **dadurch gekennzeichnet, dass** der erste Druckpuffer (11) aus einem kompressiblen polymeren Werkstoff besteht.

11. Dichtungsanordnung nach einem der Ansprüche 1 bis 10, **dadurch gekennzeichnet, dass** der erste Druckpuffer (11) aus einem geschlossenzelligen thermoplastischen Werkstoff besteht.

12. Dichtungsanordnung nach einem der Ansprüche 1 bis 11, **dadurch gekennzeichnet, dass** der erste Druckpuffer (11) die abzudichtende Fläche (4) des abzudichtenden Maschinenelements (5) mit radialem Abstand umschließt.

13. Dichtungsanordnung nach einem der Ansprüche 1 bis 12, **dadurch gekennzeichnet, dass** der Sekundärdichtring (3), der den zweiten Druckpuffer (12) bildet, eine dem Primärdichtring (2) axial abgewandte erste Stirnseite (19) aufweist, die als in axialer Richtung elastisch nachgiebiger Verformungsbereich (20) ausgebildet ist, der eine größere axiale Nachgiebigkeit aufweist, als der übrige Sekundärdichtring (3).

14. Dichtungsanordnung nach Anspruch 13, **dadurch gekennzeichnet, dass** die erste Stirnseite (19) eine Fase (21) aufweist, die mit dem Nutgrund (22) der Sekundär-Einbaunut (23) und der dem Primärdichtring (2) axial abgewandten Stirnseite (24) der Sekundär-Einbaunut (23) einen - im Schnitt betrachtet- dreieckförmigen Hohlraum (25) begrenzt.

15. Dichtungsanordnung nach einem der Ansprüche 13 oder 14, **dadurch gekennzeichnet, dass** die erste Stirnseite (19) zumindest eine axial entgegen dem Primärdichtring (2) offene ringförmige erste Ausnehmung (26) aufweist.

16. Dichtungsanordnung nach Anspruch 15, **dadurch gekennzeichnet, dass** zumindest zwei Ausnehmungen (26, 27) vorgesehen sind, die einander konzentrisch zugeordnet sind.

17. Dichtungsanordnung nach einem der Ansprüche 1 bis 16, **dadurch gekennzeichnet, dass** der zweite Druckpuffer (12) entsprechend einer in axialer Richtung elastisch nachgiebigen Federscheibe ausgebildet ist

18. Dichtungsanordnung nach einem der Ansprüche 1 bis 17, **dadurch gekennzeichnet, dass** der zweite Druckpuffer (12), in Umfangsrichtung betrachtet, eine Wellenform (17) mit axial vorspringenden Wellen (18) aufweist.

19. Dichtungsanordnung nach einem der Ansprüche 1 bis 18, **dadurch gekennzeichnet, dass** auf der dem Primärdichtring (2) axial abgewandten Seite des Sekundärdichtrings (3) ein Abstreifring (28) angeordnet ist, mit zumindest einer Abstreiflippe (29), die die abzudichtende Fläche (4) des abzudichtenden Maschinenelements (5) anliegend berührt.

20. Dichtungsanordnung nach einem der Ansprüche 1 bis 19, **dadurch gekennzeichnet, dass** auf der dem abzudichtenden Raum (1) axial zugewandten Seite des Primärdichtrings (2) ein Führungsring (30) für das abzudichtende Maschinenelement (5) angeordnet ist.

21. Dichtungsanordnung nach einem der Ansprüche 1 bis 20, **dadurch gekennzeichnet, dass** das abzudichtende Maschinenelement (5) durch eine translatorisch hin- und herbewegbare Stange (31) gebildet ist, die gegenüber einem die Stange (31) außenseitig umschließenden Gehäuse (32) abgedichtet ist.

## Claims

1. Sealing arrangement comprising at least one primary sealing ring (2), which is arranged axially in the direction of a space (1) to be sealed, and at least one secondary sealing ring (3), which is assigned adjacently to the primary sealing ring (2), with an axial spacing, on the side directed axially away from the space (1) to be sealed, wherein the secondary sealing ring (3) is connected downstream of the primary sealing ring (2) in a functional series connection, wherein the primary sealing ring (2) and the secondary sealing ring (3) can each be placed in a sealing manner against a surface (4) to be sealed of a machine element (5) to be sealed, and wherein the primary sealing ring (2) and the secondary sealing ring (3) form the terminal boundary (6, 7) of an annular space (8), **characterized in that** a first pressure buffer (11) which is produced separately - in relation to the primary sealing ring (2) and the secondary sealing ring (3) - is arranged within the annular space (8) and/or the secondary sealing ring (3) is designed as a second pressure buffer (12).

2. Sealing arrangement according to Claim 1, **characterized in that** the annular space (8) can be connected in a flow-conducting manner to the space (1) to be sealed through at least one pressure relief opening (10).

3. Sealing arrangement according to either or Claims 1 and 2, **characterized in that** the primary sealing ring (2) is able to move axially back and forth within a primary installation groove (9) and includes the pressure relief opening (10) through which the annular space (8) and the space (1) to be sealed can be connected in a flow-conducting manner.

4. Sealing arrangement according to one of Claims 1 to 3, **characterized in that** the first pressure buffer (11) is ring-shaped and elastically flexible and arranged in an installation groove (3) which is open radially in the direction of the machine element (5) to be sealed.

5. Sealing arrangement according to one of Claims 1 to 4, **characterized in that** the first pressure buffer (11) is circular ring-shaped.

6. Sealing arrangement according to one of Claims 1 to 5, **characterized in that** the first pressure buffer (11) is designed as a gas-filled tube (14) which is bounded by a wall (16) which is elastically flexible at least in part and resistant to the medium to be sealed.

7. Sealing arrangement according to Claim 6, **characterized in that** the tube (14) is made completely of an elastomeric material.

8. Sealing arrangement according to either of Claims 6 and 7, **characterized in that** atmospheric pressure prevails within the tube (14) for production reasons.

9. Sealing arrangement according to either of Claims 6 and 7, **characterized in that** the gaseous medium within the tube (14) is subjected to a relative overpressure with respect to the atmospheric pressure for production reasons.

10. Sealing arrangement according to one of Claims 1 to 9, **characterized in that** the first pressure buffer (11) is made of a compressible polymeric material.

11. Sealing arrangement according to one of Claims 1 to 10, **characterized in that** the first pressure buffer (11) is made of a closed-cell thermoplastic material.

12. Sealing arrangement according to one of Claims 1 to 11, **characterized in that** the first pressure buffer (11) encloses the surface (4) to be sealed of the machine element (5) to be sealed with a radial spacing.

13. Sealing arrangement according to one of Claims 1 to 12, **characterized in that** the secondary sealing ring (3), which forms the second pressure buffer (12), has a first end face (19) which is directed axially away from the primary sealing ring (2) and which is designed as a deformation region (20) which is elastically flexible in the axial direction, this region having a greater degree of axial flexibility than the remainder of the secondary sealing ring (3).

14. Sealing arrangement according to Claim 13, **characterized in that** the first end face (19) has a bevel (21) which, together with the bottom (22) of the secondary installation groove (23) and with the end face (24) of the secondary installation groove (23) that is directed axially away from the primary sealing ring (2), bounds a cavity (25) which is triangular when viewed in section.

15. Sealing arrangement according to either of Claims 13 and 14, **characterized in that** the first end face (19) has at least one annular first recess (26) which is open axially counter to the primary sealing ring (2).

16. Sealing arrangement according to Claim 15, **characterized in that** at least two recesses (26, 27) which are assigned concentrically to one another are provided.

17. Sealing arrangement according to one of Claims 1 to 16, **characterized in that** the second pressure buffer (12) is designed to correspond to a spring washer which is elastically flexible in the axial direction.

18. Sealing arrangement according to one of Claims 1 to 17, **characterized in that** the second pressure buffer (12), when viewed in the circumferential direction, has a wavy shape (17) with axially projecting waves (18).

19. Sealing arrangement according to one of Claims 1 to 18, **characterized in that** a stripping ring (28) having at least one stripping lip (29) which lies in contact against the surface (4) to be sealed of the machine element (5) to be sealed is arranged on that side of the secondary sealing ring (3) which is directed axially away from the primary sealing ring (2).

20. Sealing arrangement according to one of Claims 1 to 19, **characterized in that** a guide ring (30) for the machine element (5) to be sealed is arranged on that side of the primary sealing ring (2) which is directed axially towards the space (1) to be sealed.

21. Sealing arrangement according to one of Claims 1 to 20, **characterized in that** the machine element (5) to be sealed is formed by a rod (31) which is able to move translationally back and forth and which is sealed with respect to a housing (32) which encloses the rod (31) on the outside.

## Revendications

1. Arrangement de joint d'étanchéité, comprenant au moins une bague d'étanchéité primaire (2) disposée dans le sens axial d'un espace à isoler (1) et au moins une bague d'étanchéité secondaire (3), qui est associée de manière adjacente à la bague d'étanchéité primaire (2) avec un écart axial du côté axialement détourné de l'espace à isoler (1), la bague d'étanchéité secondaire (3) étant placée à la suite de la bague d'étanchéité primaire (2) dans un montage en série fonctionnel, la bague d'étanchéité primaire (2) et la bague d'étanchéité secondaire (3) pouvant chacune être appliquée de manière à isoler une surface (4) à isoler d'un élément de machine à isoler (5), la bague d'étanchéité primaire (2) et la bague d'étanchéité secondaire (3) formant la limite frontale (6, 7) d'un espace annulaire (8), **caractérisé en ce qu'**un premier tampon de compression (11), fabriqué séparément par rapport à la bague d'étanchéité primaire (2) et à la bague d'étanchéité secondaire (3), est disposé à l'intérieur de l'espace annulaire (8) et/ou la bague d'étanchéité secondaire (3) est réalisée en tant que deuxième tampon de compression (12).

2. Arrangement de joint d'étanchéité selon la revendication 1, **caractérisé en ce que** l'espace annulaire (8) peut être fluidiquement relié à l'espace à isoler (1), par au moins un orifice d'évacuation de pression (10).

3. Arrangement de joint d'étanchéité selon la revendication 1 ou 2, **caractérisé en ce que** la bague d'étanchéité primaire (2) peut être déplacée axialement dans un sens et dans l'autre à l'intérieur d'une rainure d'insertion primaire (9) et comporte l'orifice d'évacuation de pression (10) qui permet de relier fluidiquement l'espace annulaire (8) et l'espace à isoler (1).

4. Arrangement de joint d'étanchéité selon l'une des revendications 1 à 3, **caractérisé en ce que** le premier tampon de compression (11) est conçu de façon élastique et annulaire et **en ce qu'**il est disposé dans une rainure d'insertion (13) ouverte radialement dans le sens de l'élément de machine (5) à isoler.

5. Arrangement de joint d'étanchéité selon l'une des revendications 1 à 4, **caractérisé en ce que** le premier tampon de compression (11) est conçu de façon annulaire circulaire.

6. Arrangement de joint d'étanchéité selon l'une des revendications 1 à 5, **caractérisé en ce que** le premier tampon de compression (11) est conçu comme un tube rempli de gaz (14) délimité par une paroi (16) au moins partiellement élastique, résistante au milieu devant être isolé.

7. Arrangement de joint d'étanchéité selon la revendication 6, **caractérisé en ce que** le tube (14) est entièrement constitué d'un matériau en élastomère.

8. Arrangement de joint d'étanchéité selon l'une des revendications 6 ou 7, **caractérisé en ce qu'**une pression atmosphérique imposée par la fabrication règne à l'intérieur du tube (14).

9. Arrangement de joint d'étanchéité selon l'une des revendications 6 ou 7, **caractérisé en ce que** de par la fabrication, le milieu gazeux à l'intérieur du tube (14) est soumis à une surpression relative par rapport à la pression atmosphérique.

10. Arrangement de joint d'étanchéité selon l'une des revendications 1 à 9, **caractérisé en ce que** le premier tampon de compression (11) est constitué d'un matériau en polymère compressible.

11. Arrangement de joint d'étanchéité selon l'une des revendications 1 à 10, **caractérisé en ce que** le premier tampon de compression (11) est constitué d'un matériau thermoplastique à pores fermés.

12. Arrangement de joint d'étanchéité selon l'une des revendications 1 à 11, **caractérisé en ce que** le premier tampon de compression (11) entoure la surface à isoler (4) de l'élément de machine (5) à isoler, en respectant un écart radial.

13. Arrangement de joint d'étanchéité selon l'une des revendications 1 à 12, **caractérisé en ce que** la bague d'étanchéité secondaire (3) formant le deuxième tampon de compression (12) comporte une première face frontale (19) axialement détournée de la bague d'étanchéité primaire (2), qui est conçue comme région de déformation (20) élastique dans le sens axial, présentant une élasticité axiale supérieure à celle du reste de la bague d'étanchéité secondaire (3).

14. Arrangement de joint d'étanchéité selon la revendication 13, **caractérisé en ce que** la première face frontale (19) comporte un bord biseauté (21), qui délimite un espace creux triangulaire (25) - du point de vue de sa coupe - ensemble avec le fond de rainure (22) de la rainure d'insertion secondaire (23) et la face frontale (24) de la rainure d'insertion secondaire (23), axialement détournée de la bague d'étanchéité primaire (2).

15. Arrangement de joint d'étanchéité selon l'une des revendications 13 ou 14, **caractérisé en ce que** la première face frontale (19) comporte au moins un premier évidement annulaire (26), qui est ouvert axialement à l'opposé de la bague d'étanchéité primaire (2).

16. Arrangement de joint d'étanchéité selon la revendication 15, **caractérisé en ce qu'**il est prévu au moins deux évidements (26, 27) associés de façon concentrique l'un à l'autre.

17. Arrangement de joint d'étanchéité selon l'une des revendications 1 à 16, **caractérisé en ce que** le deuxième tampon de compression (12) est conçu à la manière d'une rondelle élastique déformable dans le sens axial.

18. Arrangement de joint d'étanchéité selon l'une des revendications 1 à 17, **caractérisé en ce que** le deuxième tampon de compression (12) comporte, dans le sens du pourtour, une forme d'onde (17) avec des ondes (18) axialement saillantes.

19. Arrangement de joint d'étanchéité selon l'une des revendications 1 à 18, **caractérisé en ce qu'**une bague de raclage (28) est disposée du côté de la bague d'étanchéité secondaire (3) qui est axialement détourné de la bague d'étanchéité primaire (2), avec au moins une lèvre de raclage (29) qui repose sur la surface à isoler (4) de l'élément de machine à isoler (5).

20. Arrangement de joint d'étanchéité selon l'une des revendications 1 à 19, **caractérisé en ce qu'**une bague de guidage (30) pour l'élément de machine (5) à isoler est disposée du côté de la bague d'étanchéité primaire (2) qui est axialement tourné vers l'espace à isoler (1).

21. Arrangement de joint d'étanchéité selon l'une des revendications 1 à 20, **caractérisé en ce que** l'élément de machine (5) à isoler est formé par une barre (31) pouvant être déplacée par translation dans un sens et dans l'autre et étant étanche par rapport à un boîtier (32) entourant la barre (31) à l'extérieur.
